# EUROPEAN PATENT APPLICATION

(11) **EP 2 420 943 A1**
(43) Date of publication of application: **22.02.2012**
(21) Application number: 10764306.6
(22) Date of filing: 17.02.2010
(51) Int. Cl.: G06F 17/30

(54) **TEXT DATA PROCESSING DEVICE AND PROGRAM**

(30) Priority: 14.04.2009 JP 2009098047
(71) Applicant: Digital Works, Inc., Hokkaido 060-0808 (JP)
(72) Inventor: ITO, Koji, Sapporo-shi Hokkaido 060-0808 (JP); KAWAHARA, Koji, Sapporo-shi Hokkaido 060-0808 (JP)
(74) Representative: Vossius & Partner
(86) International application number: PCT/JP2010/052358
(87) International publication number: WO 2010/119720

(57) **Abstract**

Provided are categorizing unit (2) which analyzes whether or not a character string contained in text data matches any of member character strings of a category provided as parameters, and acquires a category character string provided as a parameter for a name scale of the matched member character string; and an integration unit (3) which integrates the acquired category character string to a relational database. A category character string converted from the text data can be arbitrarily changed by a parameter, and a member character string used for assessing the match at the time of converting the text data to the category character string can be also changed arbitrarily by a parameter, and thereby, the text data can be flexibly categorized interactively.

## Description

### TECHNICAL FIELD

The present invention relates to a text data processing device and a program, and more particularly to a technique for classifying text data based on a category to be a nominal (name) thereof, thereby enabling a statistical analytical processing by setting text data as a target.

### BACKGROUND ART

Conventionally, a free answer to a questionnaire, qualitative information sent from a user to a call center or a Web site, writing to a notice board or the like is generally analyzed to grasp some feature or tendency, to extract a demand for a customer or a market, and to analyze a complaint to an in-house product, thereby considering an effective countermeasure. In the case in which the analysis is carried out through a computer, it is necessary to execute a processing for analyzing a large quantity of electronic text data. With text data themselves, however, it is impossible to extract valuable information featuring a group of the text data or to obtain useful information for people by carrying out counting through a statistical method.

On the other hand, there is a text data analyzing method which is referred to as text mining. The text mining is a method for dividing irregular text data (a normal natural sentence) into a word, a phrase or the like and analyzing an appearance frequency, a correlation or the like, thereby extracting meaning of a text, a certain knowledge or the like. However, the text mining requires a user to have an advanced knowledge of a statistical analysis. Therefore, this is a factor for hindering a spread. Moreover, the text mining requires a proper preparation for a processing. For this reason, it is difficult to rapidly repeat a cycle of an analysis to be executed on a trial-and-error basis by changing an analyzing method in an interactive mode (which will be hereinafter referred to as an interactive analysis).

In general, a method capable of carrying out an interactive analysis includes a method referred to as an OLAP (online analytical processing). The OLAP represents a concept of a system by which a user multidimensionally analyzes a database and visualizes a result thereof. The multidimensional analysis is executed by the OLAP through a repetition of an operation such as "dicing" for setting an axis every category, for example, every area or every product and comparing a result obtained by replacing the axis to carry out an analysis, "slicing" for analyzing a time series transition of data on a certain category, "drill-down" for stepwise investigating and analyzing data on a hierarchical category, "drill-up" to be an analysis in a reverse direction to the drill-down, or the like. The OLAP has a feature that a user himself (herself) thinking of a necessary analysis directly operates data dynamically on a trial-and-error basis.

Since the text data are not categorized exactly, they are not intended for the OLAP operation. On the other hand, there is proposed a technique for classifying (categorizing) sentences of a large quantity of electronic text data and enabling a statistical processing (for example, see Patent Document 1). Referring to the technique described in the Patent Document 1, text information about a natural sentence to be nonstructural data is interpreted and is converted into category information which can be subjected to a totalization processing. Then, the category information is converted into structural data in a tabular format and is unified into a relational database (RDB) having structural data related to another category.

Thus, the Patent Document 1 provides a method of adapting text data to a framework of the OLAP. In other words, by incorporating a function for categorizing the text data into an RDB spreading in the industry of the OLAP, it is possible to practically use an excellent analyzing capability of the OLAP in the analysis of the text data. The RDB can freely select and extract data to be an analyzing target by generating an optional SQL (Structured Query Language) sentence. The framework of the OLAP for carrying out an irregular analysis by utilizing a property of the RDB is referred to as an irregular OLAP. The Patent Document 1 proposes the technique for adapting text data to the framework of the irregular OLAP. Therefore, it is also possible to select an optional combination from a plurality of structural data constituting the RDB including structural data in which the text data are first categorized, thereby carrying out a statistical analysis.

Patent Document 1 : Japanese Unexamined Patent Application Publication No. 2006-509307

### DISCLOSURE OF THE INVENTION

Referring to the technique described in the Patent Document 1, however, category information obtained by a conversion from text data is fixed in accordance with a program. In other words, after the text data are categorized and incorporated into an RDB, it is possible to carry out an interactive analysis of the RDB by using the incorporated data. In a scene as to how to categorize the text data, however, there is a problem in that an operation cannot be carried out on a trial-and-error basis in an interactive mode.

The present invention has been made to solve the problem and has an obj ect to provide a text data analyzing method capable of freely categorizing text data in an interactive mode and repeating a trial-and-error based analysis easily and rapidly.

In order to achieve the object, in the present invention, it is analyzed whether a character string included in text data is coincident with any of member character strings given as a parameter or not, and there is acquired a category character string given as a parameter of a nominal scale of a category to which the coincident member character string belongs. The category character string thus acquired is unified into a relational database.

According to the present invention having the structure described above, it is possible to optionally change, through a parameter, a category character string obtained by a conversion from text data. Moreover, it is also possible to optionally change, through a parameter, a member character string of a category to be used for matching in a conversion of the text data into the category character string. Therefore, it is possible to freely categorize the text data in an interactive mode while changing the category character string or the member character string belonging to the category on a trial-and-error basis. Furthermore, the category character string obtained by the conversion from the text data is unified into the relational database. Therefore, an operation for carrying out an analysis for the relational database including the category character string as one of items can also be carried out in an interactive mode on a trial-and-error basis. Consequently, it is possible to repeat a trial-and-error based analysis for the text data easily and rapidly.

### BRIER DESCRIPTION OF THE DRAWING

Fig. 1 is a block diagram showing an example of a functional structure of a text data processing device according to the present embodiment.
Fig. 2 is a diagram showing an example of a base table stored in an RDB.
Fig. 3 is a diagram showing a result obtained by categorizing text data in accordance with an SQL sentence in an example 1.
Fig. 4 is a diagram showing a temporary table (a category table) generated by a temporary table generating portion according to the present embodiment in accordance with an SQL sentence in an example 2.
Fig. 5 is a diagram showing a table for a result obtained by internally combining the temporary table and the base table through a table combining portion according to the present embodiment in accordance with the SQL sentence in the example 2.
Fig. 6 is a diagram showing a result obtained by executing a grouping calculation in accordance with the SQL sentence in the example 2.
Fig. 7 is a diagram showing a temporary table (a category table) generated by the temporary table generating portion according to the present embodiment in accordance with an SQL sentence in an example 3.
Fig. 8 is a diagram showing a table for a result obtained by internally combining the temporary table and the base table through the table combining portion according to the present embodiment in accordance with the SQL sentence in the example 3.
Fig. 9 is a diagram showing a result obtained by executing the grouping calculation in accordance with the SQL sentence in the example 3.
Fig. 10 is a diagram showing a temporary table (a category table) generated by the temporary table generating portion according to the present embodiment in accordance with an SQL sentence in an example 4.
Fig. 11 is a diagram showing a table for a result obtained by internally combining the temporary table and the base table through the table combining portion according to the present embodiment in accordance with the SQL sentence in the example 4.
Fig. 12 is a diagram showing a result obtained by executing the grouping calculation in accordance with the SQL sentence in the example 4.

### BEST MODE FOR CARRYING OUT THE INVENTION

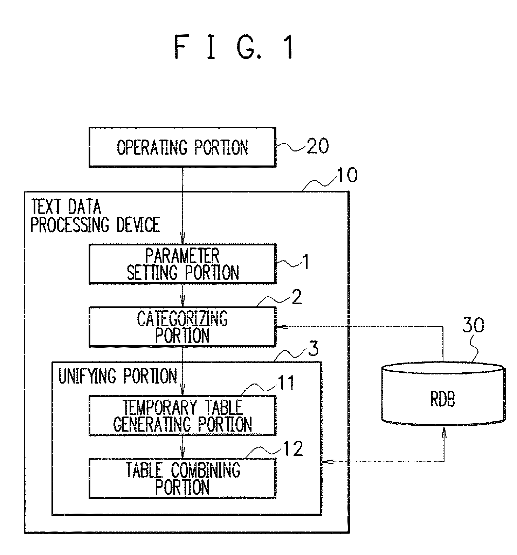

An embodiment according to the present invention will be described below with reference to the drawings. Fig. 1 is a block diagram showing an example of a functional structure of a text data processing device according to the present embodiment. As shown in Fig. 1, a text data processing device 10 according to the present embodiment includes, as a functional structure thereof, a parameter setting portion 1, a categorizing portion 2 and a unifying portion 3. The unifying portion 3 includes a temporary table generating portion 11 and a table combining portion 12. As will be described below in detail, the text data processing device 10 according to the present embodiment provides means for analyzing text data stored in a relational database (RDB 30) in an interactive mode on a trial-and-error basis while setting an optional parameter through an operation of an operating portion 20 by a user.

In Fig. 1, the parameter setting portion 1 sets, as a parameter, a category character string representing at least one optional category and a member character string representing at least one element belonging to the category. More specifically, the parameter setting portion 1 sets, as an argument to be used in a function which will be described below, at least one category character string and at least one member character string which are input through the operation of the operating portion 20 constituted by a keyboard, a mouse or the like. When setting the parameter, it is possible to include at least one member for a single category. It is possible to set at least one group of the category and at least one member.

The categorizing portion 2 analyzes whether or not a character string included in text data stored every record indicated by a record identifier (RID) in a base table of the RDB 30 (a table obtained before a unification processing is executed by the unifying portion 3) is coincident with any of the member character strings set by the parameter setting portion 1, and acquires, for each record, a category character string to be a nominal scale of the coincident member character string.

For example, it is assumed that text data stored in a first record of RID = 1 in the RDB 30 is a composition (a natural sentence) of "a product was damaged", "complaint" is set as a category character string by the parameter setting portion 1, and furthermore, "damage" and "mix" are set as members belonging to the category. In this case, the categorizing portion 2 decides that a character string of "damage" included in a part of the text data is coincident with a member character string of "damage" set by the parameter setting portion 1, and acquires a category character string of "complaint" to be a nominal scale of the coincident member character string. The categorizing portion 2 also executes the processing for categorizing text data over a record of another RID in the same manner.

The categorizing portion 2 implements the categorization processing for converting text data into a category character string as described above by introducing the TEXT_CLASSIFY function invented by the applicant (which corresponds to a first function according to the present invention). The TEXT_CLASSIFY function is defined to retrieve text data stored in the base table of the RDB 30 every record of the base table and to delimit, with a delimiting mark (a delimiter), a list of at least one category character string to be a nominal scale of any of the at least one member character string with which the character string included in the text data is coincident if any, and to return the list.

The unifying portion 3 unifies the category character string acquired every record through the categorizing portion 2 into the base table of the RDB 30. The processing for unifying the category character string can be executed by a projecting operation or a combining operation which is a relational calculation of the relational database. A general projecting operation serves to specify only a necessary column from the table and to take data in the specified column from the table. In the present embodiment, a category character string of each record acquired by the execution of the TEXT_CLASSIFY function is taken out in addition to data on each record of a column in the base table to unify the category character string acquired every record by the categorizing portion 2 into the base table of the RDB 30.

Moreover, the combining operation serves to generate a single table from a plurality of tables. In the case in which the processing for unifying the category character string is executed through the combining operation, the temporary table generating portion 11 and the table combining portion 12 are used. The temporary table generating portion 11 stores the category character string acquired every record by the categorizing portion 2 together with the RID, thereby generating a temporary table. The table combining portion 12 serves to combine the temporary table generated by the temporary table generating portion 11 and the base table of the RDB 30 by setting the RID as a key.

The temporary table generating portion 11 implements the processing for generating a temporary table from a category character string as described above by introducing the TEXT__EXTRACT function invented by the applicant (which corresponds to a second function according to the present invention). The TEXT_EXTRACT function is defined to divide a list of at least one category character string which is delimited by the delimiter and is enumerated in a row direction (each record of the temporary table) and to store the list together with the RID.

Each functional structure block of the text data processing device 10 according to the present embodiment described above can also be implemented by a hardware configuration, a DSP or software. For example, in the case in which the functional structure block is implemented by the software, the text data processing device 10 according to the present embodiment is actually constituted by a CPU, an MPU, an RAM, an ROM or the like in a computer and can be implemented through an operation of a program stored in the RAM or the ROM.

Explanation will be given to a specific example of an operation of the text data processing device 10 according to the present embodiment which has the structure described above. For convenience of the explanation, there is used an SQL language to be a standard computer language of a relational database operation. In the present invention, the relational database operation having an orthogonality in accordance with a relational algebra model is an indispensable requirement and the SQL language is not the indispensable requirement.

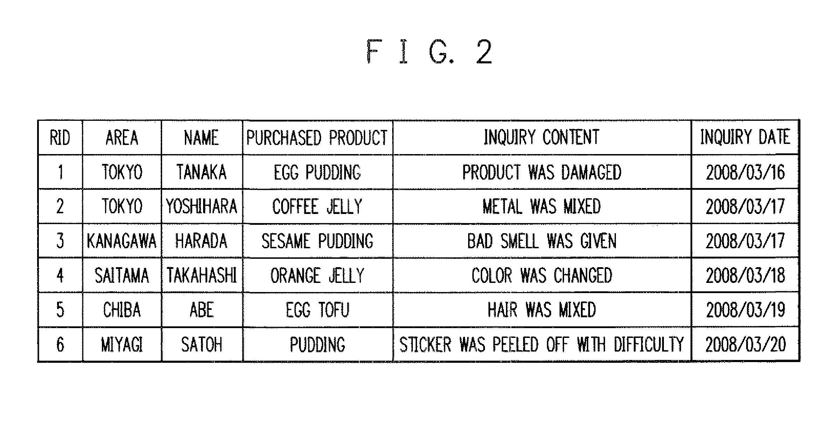

Fig. 2 is a diagram showing an example of the base table stored in the RDB 30. The example shown in Fig. 2 represents an inquiry information table indicative of contents of inquiries received from a plurality of consumers, and a single inquiry content is stored in a single record. Each record includes an RID, an area, a name, a purchased product, an inquiry content and an inquiry date as attribute items. The inquiry content is an attribute item in which a natural sentence described freely by the consumer is stored as text data. In the present embodiment, the text data stored in the attribute item for the inquiry content are categorized into a nominal scale and are thus analyzed. In that case, it is possible to carry out, on a trial-and-error basis, various analytical processings which will be described below by properly using the TEXT_CLASSIFY function and the TEXT-EXTRACT function.

### Example 1. An example in which a group projecting column is created in accordance with the TEXT_CLASSIFY function

An example of an SQL sentence in this case will be described below.

```
SELECT
 TEXT_CLASSIFY (---- (1)
      inquiry information table. inquiry content, ---- (2)
      'complaint' : ['damage', 'mix' , 'bad or change', 'color']
 ---- (3)
      'foreign substance` : ['bug', 'refuse', 'mental', 'hair']
 ---- (4)
      'others') group, ---- (5)
 RID, area, name, purchased product, inquiry content, inquiry
 date ---- (6)
 FROM inquiry information table ---- (7)
```

Meaning of each of rows (1) to (7) in the SQL sentence is as follows.
(1) Specify the TEXT_CLASSIFY function of a row unit processing into a first projecting column. The row unit processing implies that a processing is carried out every record.
(2) Specify, as a first argument, "inquiry content" to be a text data item of "inquiry information table" (base table).
(3) Specify a first set of categories as a second argument. The category is defined to be 'complaint' and a set of belonging members is defined to be ['damage', 'mix', 'bad or change', 'color'].
(4) Specify a second set of categories as a third argument. The category is defined to be 'foreign substance' and a set of belonging members is defined to be ['bug', 'refuse', 'metal', 'hair'].
(5) Specify an exceptional category as a fourth argument. Moreover, specify "group" as an alternative item name of the TEXT__CLASSIFY function specified in the first projecting column. The exceptional category is defined to be 'others'. The exceptional category indicates a category to be substituted when a character string included in text data does not correspond to any of the members belonging to the categories defined in the rows (3) and (4).
(6) Specify each attribute item of "inquiry information table" on and after a second projecting column.
(7) Specify "inquiry information table" (base table) as a table reference.

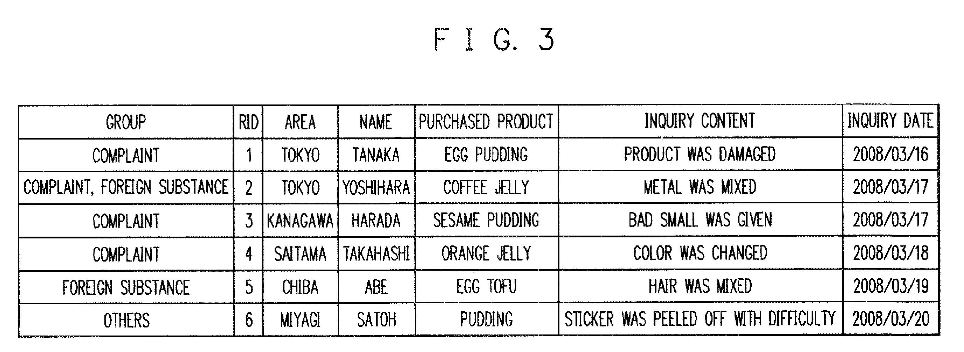

In the SQL sentence, the rows (1) to (5) imply that text data on "inquiry content" are converted into a category character string in accordance with the TEXT_CLASSIFY function and the category character string is acquired as data on a new attribute item of "group". The residual rows in the SQL sentence imply that data on an attribute item of "group" acquired in accordance with the TEXT_CLASSIFY function and data on each attribute item specified in the row (6) are taken out as data in each column of the inquiry information table specified in the row (7). Fig. 3 is a diagram showing a result of an execution of the SQL sentence.

In Fig. 3, for example, text data stored in the attribute item of "inquiry content" in a first record of RID = 1 is a composition (a natural sentence) of "a product was damaged". Moreover, a character string of "damage" included in the text data is coincident with a character string of "damage" in the member defined as the second argument in the row (3). For this reason, in the first record of RID = 1, the category character string of "complaint" is acquired as the nominal scale of the member character string of "damage" and is unified, into the base table, as data in a first record of a new attribute item of "group" which is added to the first column (the first projecting column).

Moreover, text data stored in an attribute item of "inquiry content" in a second record of RID = 2 is a composition (a natural sentence) of "a metal was mixed". Moreover, a character string of "mix" included in the text data is coincident with a character string of "mix" in the member defined as the second argument in the row (3). Furthermore, a character string of "metal" included in the text data is coincident with a character string of "metal" included in a member defined as the third argument in the row (4). For this reason, in the second record of RID = 2, the category character string of "complaint" is acquired as a nominal scale of the member character string of "mix" and a category character string of "foreign substance" is acquired as a nominal scale of the member character string of "metal", and they are unified, into the base table, as data of the second record in a new attribute item of "group" in the first projecting column.

For records of RID = 3 to 6, category character strings are acquired by the same processing and are unified, into the base table, as data of the new attribute item of "group" in the first projecting column. Referring to a sixth record of RID = 6, text data stored in the attribute item of "inquiry content" is a composition (a natural sentence) of "a sticker was peeled off with difficulty", and neither a member character string belonging to the category of "complaint" nor a member character string belonging to the category of "foreign substance" is included therein. For this reason, in the sixth record of RID = 6, the exceptional category character string of "others" is acquired.

In other words, referring to each of the records of RID = 1 to 6, a category list to be a return value of the TEXT_CLASSIFY function is as follows and the category character strings indicated by the return values are unified, into the base table, as data of the attribute item of "group".

```
      RID = 1 return value = ['complaint']
      RID = 2 return value = ['complaint', 'foreign
 substance']
      RID = 3 return value = ['complaint']
      RID = 4 return value = ['complaint']
      RID = 5 return value = ['foreign substance']
      RID = 6 return value = ['others']
```

### Example 2. An example in which a one-dimensional category collection table is created in accordance with the TEXT___CLASSIFY function and the TEXT__EXTRACT function

An example of the SQL sentence in this case will be described below.

```
 SELECT
      category table. group 1 group 1,
      COUNT (DISTINCT inquiry information table. RID)
 appearance frequency ---- (1)
 FROM
      inquiry information table, ---- (2)
      TEXT_EXTRACT ( ---- (3)
      inquiry information table, ---- (4)
      RID, ---- (5)
      TEXT__CLASSIFY ( ---- (6)
         inquiry information table. inquiry content, ---- (7)
         'complaint' : ['damage', 'mix', 'bad or change',
 'color' ---- (8)
         'foreign substance' : ['bug', 'refuse', 'metal',
 'hair'] ---- (9)
         'others') group 1 ---- (10)
         ) category table ---- (11)
      WHERE inquiry information table. RID = category table.
 RID ---- (12)
      GROUP BY category table. group 1 ---- (13)
```

Meaning of each of the rows (1) to (13) in the SQL sentence is as follows.
(1) Specify "category table. group 1" as a projecting column and "group 1" as an alternative item name thereof. Moreover, specify the COUNT function for a duplication removal designation of the RID and "appearance frequency" as an alternative item name thereof.
(2) Specify "inquiry information table" (base table) as a first table for a table reference.
(3) Specify the TEXT_EXTRACT function as a second table for a table reference.
(4) Specify "inquiry information table" (base table) as a first argument of the TEXT_EXTRACT function.
(5) Specify a record identifier (RID) of the inquiry information table as a second argument of the TEXT_EXTRACT function. A combined item name of the TEXT_EXTRACT function is automatically set to be the same name (RID).
(6) Specify the TEXT_CLASSIFY function as a third argument of the TEXT_CONTRACT function.
(7) to (10) First to fourth arguments of the TEXT_CLASSIFY function are equal to the first to fourth arguments in "Example 1. An example in which a group projecting column is created in accordance with the TEXT_CLASSIFY function" provided that "group 1" is specified as an alternative item name of a return value.
(11) Specify, as "category table", a table reference alternative name of the TEXT_EXTRACT function.
(12) Specify to internally combine the inquiry information table and the category table through the RID.
(13) Specify to carry out a grouping calculation in "category stable, group 1" by setting a combined result table as a target.

In the SQL sentence, a processing is started from an evaluation of a table reference in an FROM phrase. In this example, a function of the table reference includes the TEXT_EXTRACT function and a function of a row unit processing includes the TEXT_CLASSIFY function. These two functions have a call relationship TEXT_EXTRACT <-, TEXT_CLASSIFY (...)...) from the row (3) to the row (11). The categorizing portion 2 executes the processing of the TEXT_CLASSIFY function on a row unit and returns a category list as a return value. The category list thus obtained is the same as the case of the Example 1.

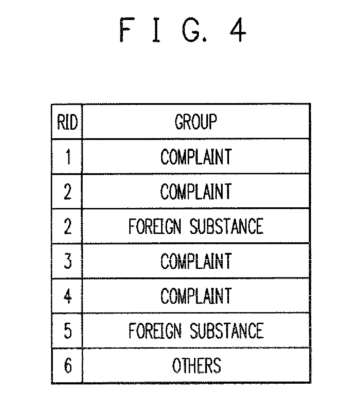

Moreover, the temporary table generating portion 11 executes a table reference processing of the TEXT_EXTRACT function by setting the return value of the TEXT_CLASSIFY function as the argument. In other words, the temporary table generating portion 11 executes a row unit processing related to the table reference (inquiry information table, RID, ['group 1' 1). The table reference processing. implies that a processing for making a set of RID of the inquiry information table and the category character string to be the return value of the TEXT_CLASSIFY function indicated by the attribute item of "group 1" and inserting the set into each record of a temporary table is carried out on a row unit. In the case in which a category character string to be a second element of the set has a plurality of elements (for example, ['complaint', 'foreign substance'] in the case of RID = 2), each of the elements is taken out and is inserted as an independent record, for example, a set of [inquiry information table. RID, first element of category list] or a set of [inquiry information table. RID, second element of category list]. The table reference processing is executed for all of the rows (records) so that the processing of the TEXT_EXTRACT function is completed. Thus, a temporary table is finished. The temporary table to be returned through the TEXT_EXTRACT function can be referred to in the table reference alternative name of "category table" specified in the row (11). In this example, the temporary table (category table) generated by the temporary table generating portion 11 is shown in Fig. 4.

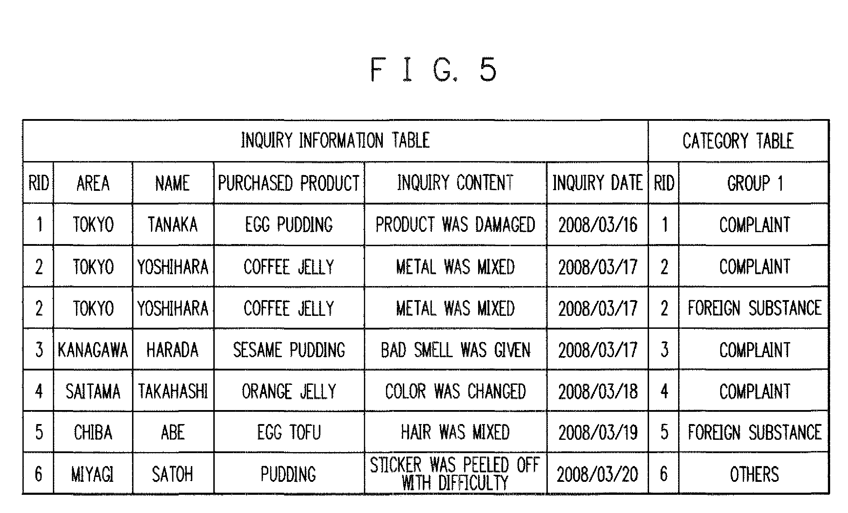

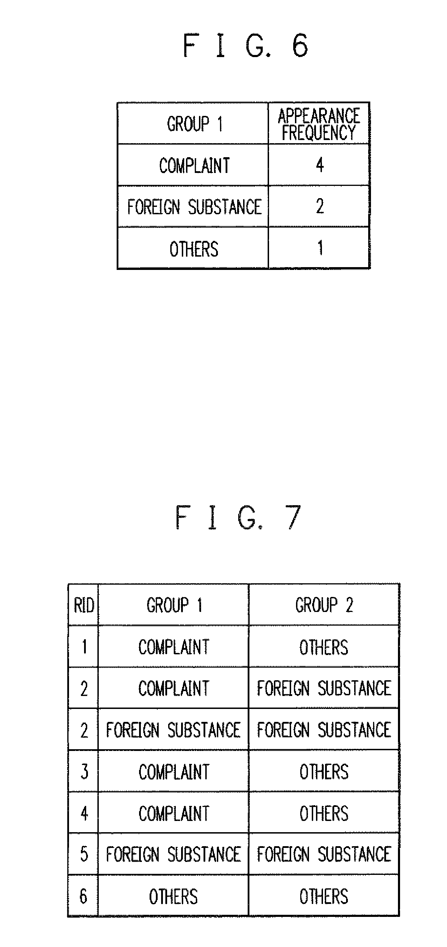

The row (12) in the SQL sentence represents a processing of the table combining portion 12. The table combining portion 12 internally combines the base table of the RDB 30 (the inquiry information table in Fig. 2) and the temporary table generated by the temporary table generating portion 11 (the category table in Fig. 4) through the RID. A table for a result of the internal combination is shown in Fig. 5. Moreover, the row (13) of the SQL sentence implies that the grouping calculation indicated in the row (1) is executed. The grouping calculation described in this example serves to count the appearance frequency of each category indicated in the attribute item of "group 1" in the category table portion in the internal combination table generated by the table combining portion 12. A result obtained by executing the grouping calculation is shown in Fig. 6.

### Example 3. An example in which a narrow-down two-dimensional category collection table is created in accordance with the TEXT_CLASSIFY function and the TEXT_EXTRACT function (which corresponds to drill-down)

An example of the SQL sentence in this case will be described below.

```
 SELECT
      category table. group 1 group 1,
      category table. group 2 group 2,
      COUNT (DISTINCT inquiry information table. RID)
 appearance frequency ---- (1)
 FROM
      inquiry information table, ---- (2)
      TEXT_EXTRACT ( ---- (3)
      inquiry information table, ---- (4)
      RID, ---- (5)
      TEXT_CLASSIFY ( ---- (6)
         inquiry information table. inquiry content, ---- (7)
         'complaint' : ['damage', 'mix', 'bad or change',
 'color' ---- (8)
         `foreign substance' : ['bug', 'refuse', 'metal',
 'hair'] ---- (9)
         'others') group 1 ---- (10)
      TEXT_CLASSIFY ( ---- (11)
         inquiry information table. inquiry content, ----
 (12)
         'foreign substance' : ['bug', 'refuse', 'metal',
 'chair'] ---- (13)
         'others') group 2 ---- (14)
 ) category table ---- (15)
 WHERE inquiry information table. RID = category table. RID
      AND category table. group 1 = 'complaint' ---- (16)
 GROUP BY category table. group 1, category table. group 2 -----
 (17)
```

Meaning of each of the rows (1) to (17) in the SQL sentence is as follows.
(1) Specify "category table, group 1" as a first projecting column and "group 1" as an alternative item name thereof. Moreover, specify "category table. group 2" as a second projecting column and "group 2" as an alternative item name thereof. Furthermore, specify the COUNT function for a duplication removal designation of the RID and "appearance frequency as an alternative item name thereof.
(2) Specify "inquiry information table" (base table) as a first table for a table reference.
(3) Specify the TEXT_EXTRACT function as a second table for a table reference.
(4) Specify "inquiry information table" (base table) as a first argument of the TEXT_EXTRACT function.
(5) Specify a record identifier (RID) of the inquiry information table as a second argument of the TEXT_EXTRACT function. A combined item name of the TEXT_EXTRACT function is automatically set to be the same name (RID).
(6) Specify the TEXT__CLASSIFY function as a third argument of the TEXT__EXTRACT function.
(7) to (10) First to fourth arguments of the TEXT_CLASSIFY function indicated in the row (6) are equal to the first to fourth arguments in "Example 1. An example in which a group projecting column is created in accordance with the TEXT_CLASSIFY function". Specify "group 1" as an alternative item name of a return value.
(11) Specify the TEXT_CLASSIFY function as a fourth argument of the TEXT__EXTRACT function.
(12) to (14) First to third arguments of the TEXT_CLASSIFY function indicated in the row (11) are equal to the first, third and fourth arguments in "Example 1. An example in which a group projecting column is created in accordance with the TEXT_CLASSIFY function" provided that "group 2" is specified as an alternative item name of a return value.
(15) Specify a table reference alternative name of the TEXT_EXTRACT function as "category table".
(16) Specify to internally combine the inquiry information table and the category table through the RID. Specify to narrow a one-dimensional item down to only 'complaints' in "category table. group 1 = 'complaint'".
(17) Specify to carry out a grouping calculation in "category table. group 1" and "category table. group 2" by setting a combined result table as a target.

In this example, a category list to be a return value of the TEXT_CLASSIFY function indicated in the row (6) is as follows.

```
      RID = 1 return value = ['complaint']
      RID = 2 return value = ['complaint', 'foreign
 substance']
      RID = 3 return value = ['complaint']
      RID = 4 return value = ['complaint']
      RID = 5 return value = [`foreign substance']
      RID = 6 return value = ['others']
```

Moreover, a category list to be a return value of the TEXT_CLASSIFY function indicated in the row (11) is as follows.

```
      RID = 1 return value = ['others']
      RID = 2 return value = ['foreign substance']
      RID = 3 return value = ['others']
      RID = 4 return value = ['others']
      RID = 5 return value = ['foreign substance']
      RID = 6 return value = ['others']
```

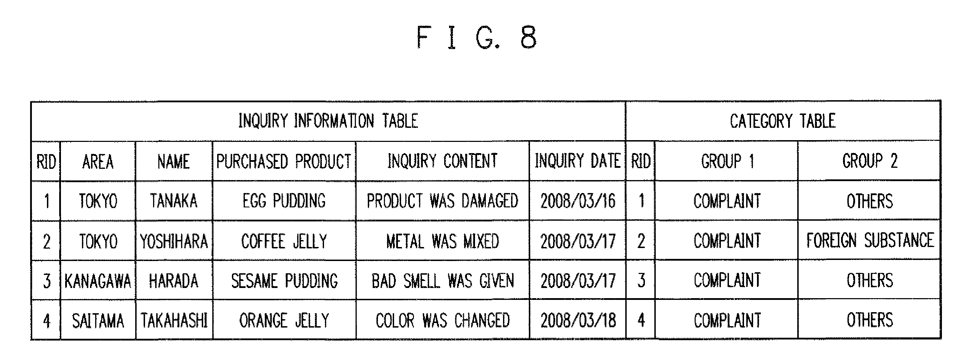

A temporary table (category table) to be generated by the temporary table generating portion 11 in accordance with the TEXT_EXTRACT function in the row (6) based on these two category lists is shown in Fig. 7. Moreover, an internal combination result table to be generated by the table combining portion 12 based on the SQL sentence indicated in the row (16), that is, a table of a result which is obtained by internally combining the base table of the RDB 30 (the inquiry information table in Fig. 2) and the temporary table generated by the temporary table generating portion 11 (the category table in Fig. 7) through the RID is shown in Fig. 8. Herein, the internal combination is carried out with a narrow-down to only the category indicated in the attribute item of "group 1." which is "complaint".

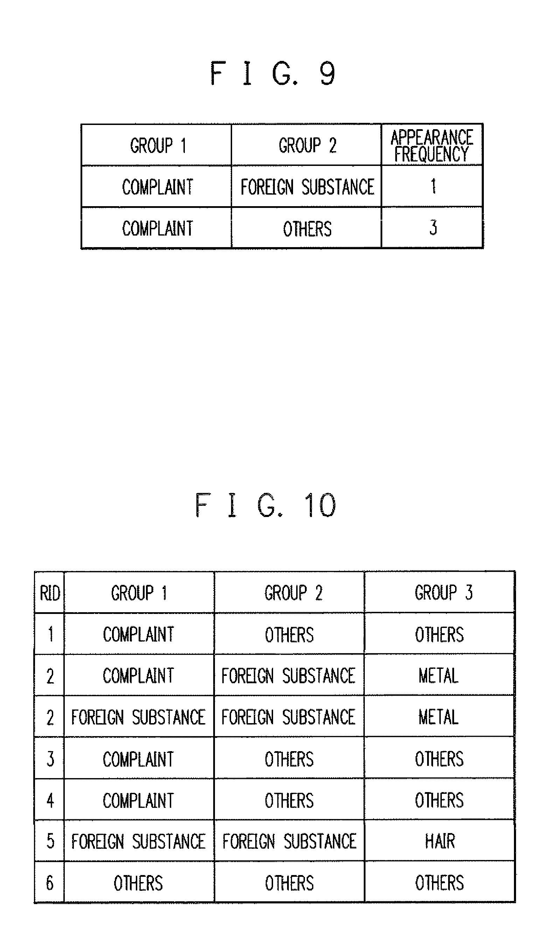

Furthermore, a result obtained by executing the grouping calculation indicated in the row (1) based on the SQL sentence indicated in the row (17) is shown in Fig. 9. The grouping calculation indicated in the row (1) serves to count an appearance frequency every different combinations of the category indicated in the attribute item of "group 1" (which is narrowed down to only the category of "complaint" in this example) and each category indicated in the attribute item of "group 2" in the category table portion of the internal combination table shown in Fig. 8 which is generated by the table combining portion 12.

Example 4. An example in which a narrow-down three-dimensional category collection table is created in accordance with the TEXT_CLASSIFY function and the TEXT_EXTRACT function (which corresponds to drill-down)
An example of the SQL sentence in this case will be described below.

```
SELECT

    category table. group 1 group 1,
    category table. group 2 group 2,
    category table. group 3 group 3,
COUNT (DISTINCT inquiry information table. RID) appearance
frequency ---- (1)
FROM
    inquiry information table, ------- (2)
    TEXT__EXTRACT ( ---- (3)
    inquiry information table, ---- (4)
    RID, ---- (5)
    TEXT_CLASSIFY ( ---- (6)
      inquiry information table. inquiry content, ----- (7)
      'complaint' : ['damage', 'mix', 'bad or change',
'color' ---- (8)
'      foreign substance' : ['bug', 'refuse', 'metal',
'hail'] ---- (9)
'      others') group 1 ---- (10)
    TEXT_CLASSIFY ( ---- (11)
      inquiry information table. inquiry content, ----
(12)
      'foreign substance' : ['bug', 'refuse', 'metal',
'chair'] ---- (13)
      'others') group 2 ---- (14)
    TEXT_CLASSIFY ( ---- (15)
      inquiry information table. inquiry content,
      'bug' : ['burg'],
      'refuse' : ['refuse']
      'metal' : ['metal']
      'hair' : ['chair'] ---- (16)
      'others') group 3 ---- (17)
    ) category table ---- (18)
WHERE inquiry information table. RID = category table. RID
    AND category table. group 1 = 'complaint'
    AND category table. group 2 = 'foreign substance' ----
(19)
GROUP BY
    category table. group 1,
    category table. group 2,
    category table. group 3 ---- (20)
```

Meaning of each of the rows (1) to (20) in the SQL sentence is as follows.
(1) Specify "category table group 1" as a first projecting column and "group 1" as an alternative item name thereof. Specify "category table group 2" as a second projecting column and "group 2" as an alternative item name thereof. Moreover, specify "category table group 3" as a third projecting column and "group 3" as an alternative item name thereof. Furthermore, specify the COUNT function for a duplication removal designation of the RID and "appearance frequency" as an alternative item name thereof.
(2) to (14) Identical to the rows (2) to (14) in "Example 3. An example in which a narrow-down two-dimensional category collection table is created in accordance with the TEXT_CLASSIFY function and the TEXT_EXTRACT function".
(15) Specify TEXT_CLASSIFY function as a fourth argument of the TEXT_EXTRACT function.
(16) Specify each argument of the TEXT_CLASSIFY function indicated in the row (15) in such a manner that the category and the member are identical to each other in order to enable an expansion of the member in the group 2.
(17) Specify "group 3" as the alternative item name of the TEXT_CLASSIFY function indicated in the row (15).
(18) Specify the table reference alternative name of the TEXT_EXTRACT function as "category table".
(19) Specify to internally combine the inquiry information table and the category table through the RID. Specify to narrow a one-dimensional item down to only 'complaint' in "category table. group 1 = 'complaint'" and to narrow a two-dimensional item down to only "foreign substance' in "category table. group 2 = 'foreign substance'".
(20) Specify to carry out a grouping calculation in "category table. group I", "category table. group 2", and "category table. group 3" by setting a combined result table as a target.

In this example, a category list to be a return value of the TEXT_CLASSIFY function indicated in the row (6) is as follows.

```
      RID = 1 return value = ['complaint']
      RID = 2 return value = ['complaint', 'foreign
 substance']
      RID = 3 return value = ['complaint']
      RID = 4 return value = ['complaint']
      RID = 5 return value = ['foreign substance']
      RID = 6 return value = ['others']
```

Moreover, a category list to be a return value of the TEXT_CLASSIFY function indicated in the row (11) is as follows.

```
      RID = 1 return value = ['others']
      RID = 2 return value = ['foreign substance']
      RID = 3 return value = ['others']
      RID = 4 return value = ['others']
      RID = 5 return value = ['foreign substance']
      RID = 5 return value = ['others']
```

Furthermore, a category list to be a return value of the TEXT_CLASSIFY function indicated in the row (15) is as follows.

```
      RID = 1 return value = ['others']
      RID = 2 return value = ['metal']
      RID = 3 return value = ['others']
      RID = 4 return value = ['others']
      RID = 5 return value = ['hair']
      RID = 6 return value = ['others']
```

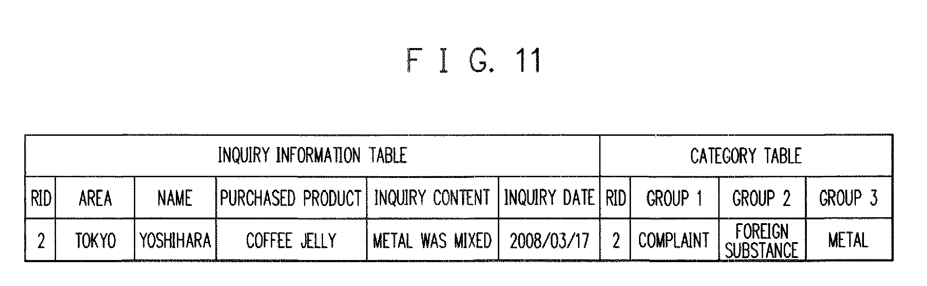

The temporary table (category table) to be generated by the temporary table generating portion 11 in accordance with the TEXT_EXTRACT function in the row (6) based on these three category lists is shown in Fig. 10. Moreover, an internal combination result table to be generated by the table combining portion 12 based on the SQL sentence indicated in the row (19), that is, a table of a result which is obtained by internally combining the base table of the RDB 30 (the inquiry information table in Fig. 2) and the temporary table generated by the temporary table generating portion 11 (the category table in Fig. 10) through the RID is shown in Fig. 11. Herein, the internal combination is carried out with a narrow-down to only the category indicated in the attribute item of "group 1" which is 'complaint' and the category indicated in the attribute item of "group 2" which is 'foreign substance'.

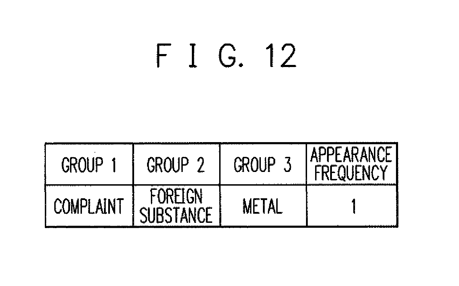

Furthermore, a result obtained by executing the grouping calculation indicated in the row (1) based on the SQL sentence indicated in the row (20) is shown in Fig. 12. The grouping calculation indicated in the row (1) serves to count an appearance frequency every different combinations of the category indicated in the attribute item of "group 1" (which is narrowed down to only the category of "complaints" in this example) , the category indicated in the attribute item of "group 2" (which is narrowed down to only the category of "foreign substance" in this example) , and each category indicated in the attribute item of "group 3" in the category table portion of the internal combination table shown in Fig. 11 which is generated by the table combining portion 12.

As described above in detail, in the present embodiment, it is analyzed whether or not the character string included in the text data of the base table for the relational database is coincident with any of the member character strings of the category given as the parameter in the TEXT_CLASSIFY function, and the category character string given as the parameter of the nominal scale in the TEXT_CLASSIFY function is acquired for the coincident member character string. The category character string thus acquired is unified into the base table. When unifying the category character string obtained by a conversion from the text data into the base table, moreover, it is also possible to generate a temporary table by using the TEXT_EXTRACT function and to unify the temporary table and the base table.

According to the present embodiment having the structure described above, it is possible to optionally change, through a parameter, a category character string obtained by a conversion from text data. Moreover, it is possible to optionally change, through a parameter, a member character string of a category to be used for matching in a conversion of the text data into the category character string. Therefore, it is possible to freely categorize the text data in an interactive mode while changing the category character string or the member character string belonging to the category on a trial-and-error basis.

Furthermore, the category character string obtained by the conversion from the text data is unified into the relational database. Therefore, an operation for carrying out an analysis (the grouping calculation or the like) for the relational database including the category character string as one of attribute items can also be carried out in an interactive mode on a trial-and-error basis. Consequently, it is possibly to repeat a trial-and-error based analysis for the text data easily and rapidly.

In other words, according to the present embodiment, it is possible to unify the text data into the framework of the conventional irregular OLAP operation and to execute the irregular OLAP operation seamlessly by setting the text data as a target without breaking the framework of the irregular OLAP operation setting, as targets, regular character item data, numerical value item data, date item data and period item data (which will be hereinafter referred to as attribute data). In this case, it is possible to carry out the irregular OLAP operation on a trial-and-error basis while optionally changing the category character string obtained by the conversion from the text data or the member character string belonging to the category as parameters.

For instance, it is possible to freely carry out an irregular OLAP operation with text data set as a target by executing a classification based on an optional set of categories (nominal scales) defined in the execution as a part of a relational database operation in the same manner as a report of an appearance frequency through the one-dimensional category described in the example 2, a report of an appearance frequency through the two-dimensional category described in the example 3 or a report of an appearance frequency through the three-dimensional category described in the example 4. Although a specific example is not described, it is also possible to freely carry out the irregular OLAP operation by setting, as a target, a combination of attribute data and a category (a nominal scale) acquired from text data.

In the present embodiment having the function for categorizing text data as a part of the relational database operation, it is also possible to carry out an effective application which will be described below. For example, in an irregular collecting query supporting the irregular OLAP operation, it is possible to examine a time series transition of an appearance frequency every category set by designating a set of categories and a date item (for example, a year, a year and month, a year, month and week, a year, month and day, or the like) as a collecting key for a grouping calculation. In this case, it is possible to finely track the time series transition of the appearance frequency every category set by drilling down the date item like a year, a year and month, a year, month and week or a year, month and day. By defining a plurality of category sets with text data set as a target and carrying out drill-down from a set of categories having a low granularity to a set of categories having a high granularity, furthermore, it is also possible to finely track a transition of an appearance frequency every category set together with the time series item.

More specifically, there will be considered the case in which a sign of a food camouflage problem that is recently got into the news or the like is to be found as early as possible. In this case, it is sufficient to define a plurality of categories for complaints having a high risk which are known based on a past experience from a set having a low granularity to a set having a high granularity and to monitor a change in a daily time series appearance frequency every category set by taking, as an investigating target, a group of text data on complaints sent to a customer service center or the like. For example, in the case in which the appearance frequency is rapidly started to be increased or decreased since one day, there is a doubt about some sign. At this time, the irregular OLAP operation based on the set of categories and the date item exercises a power to find the sign.

Although the description has been given to the example in which the categorization is carried out by taking, as a target, the text data stored in the base table of the RDB 30 in the embodiment, the present invention is not restricted thereto. For example, it is also possible to carry out the categorization by taking, as a target, index information generated from the text data in place of the text data stored in the base table of the RDB 30. The index information may be an index for a whole sentence retrieval which is generated from the text data stored in the base table or an index of a category which is generated through a subject extraction processing of a natural language processing, a relation processing or the like from the text data stored in the base table.

Although the description has been given to the example in which the TEXT_CLASSIFY function is used for categorizing the text data in the embodiment, moreover, the present invention is not restricted thereto. If a category can be extracted from the text data, any specific method can be employed.
Although four examples have been taken as an example of the irregular OLAP operation for the text data in the embodiment, furthermore, it is apparent that the other irregular OLAP operations can be carried out.

In addition, the embodiment is only illustrative for a materialization to carry out the present invention and the technical scope of the present invention should not be thereby construed to be restrictive. In other words, the present invention can be carried out in various configurations without departing from the spirit or main features thereof.

### INDUSTRIAL APPLICABILITY

The present invention can be utilized in the computer technology for classifying text data based on a category to be a nominal scale thereof, thereby enabling a statistical analytical processing with the text data set as a target.
This application is based on Japanese Patent Application No. 2009-098047 filed on April 14, 2009, the contents of which are incorporated hereinto by reference.

## Claims

1. A text data processing device comprising:
parameter setting means for setting, as a parameter, a category character string representing at least one optional category and a member character string representing at least one element which belongs to the category;
categorizing means for analyzing whether or not a character string included in text data stored every record which is designated with a record identifier in a base table of a relational database is coincident with any of member character strings set by the parameter setting means and acquiring a category character string to be a nominal scale of the coincident member character string every record; and
unifying means for unifying the category character string acquired every record by the categorizing means into the base table of the relational database.

2. The text data processing device according to claim 1, wherein the unifying means includes:
temporary table generating means for storing the category character string acquired every record by the categorizing means together with the record identifier, thereby generating a temporary table; and
table combining means for combining the temporary table generated by the temporary table generating means and the base table.

3. The text data processing device according to claim 1 or 2, wherein the categorizing means executes a calculation in accordance with a first function defined to retrieve the text data stored in the base table every record of the base table and to delimit, with a delimiting mark, a list of at least one category character string to be a nominal scale of any of the at least one member character string with which the character string included in the text data is coincident if any, and to return the list, thereby converting the text data into the category character string.

4. The text data processing device according to claim 2, wherein the categorizing means executes a calculation in accordance with a first function defined to retrieve the text data stored in the base table every record of the base table and to delimit, with a delimiting mark, a list of at least one category character string to be a nominal scale of any of the at least one member character string with which the character string included in the text data is coincident if any, and to return the list, thereby converting the text data into the category character string, and
the temporary table generating means executes a calculation in accordance with a second function defined to divide at least one category character string delimited with the delimiting mark and enumerated into each record of the temporary table and to store the record together with the record identifier, thereby generating the temporary table.

5. The text data processing device according to claim 1, wherein the categorizing means analyzes whether or not a character string included in index information generated from the text data is coincident with any of the member character strings set by the parameter setting means in place of the text data stored in the base table of the relational database, and acquires a category character string to be a nominal scale of the coincident member character string every record.

6. A computer readable program for causing a computer to function as:
parameter setting means for setting, as a parameter, a category character string representing at least one optional category and a member character string representing at least one element which belongs to the category;
categorizing means for analyzing whether or not a character string included in text data stored every record which is designated with a record identifier in a base table of a relational database is coincident with any of member character strings set by the parameter setting means and acquiring a category character string to be a nominal scale of the coincident member character string every record; and
unifying means for unifying the category character string acquired every record by the categorizing means into the base table of the relational database.
